# EUROPÄISCHE PATENTSCHRIFT

(11) **EP 2 547 448 B1**
(45) Veröffentlichungstag und Bekanntmachung des Hinweises auf die Patenterteilung: **22.04.2015**
(21) Anmeldenummer: 11701957.0
(22) Anmeldetag: 02.02.2011
(51) Int. Cl.: B01L 3/00, B01D 65/00, B01D 61/18, B01D 63/08, G01N 33/53, G01N 33/543

(54) **MEHRFACHLOCHPLATTE MIT FILTERMEDIUM UND IHRE VERWENDUNG**
MULTI-WELL PLATE HAVING FILTER MEDIUM AND USE THEREOF
PLAQUE À PLUSIEURS TROUS COMPORTANT UN MILIEU FILTRANT ET SON UTILISATION

(30) Priorität: 16.03.2010 DE 102010011485
(43) Veröffentlichungstag der Anmeldung: 23.01.2013
(73) Patentinhaber: Sartorius Stedim Biotech GmbH, 37079 Göttingen (DE)
(72) Erfinder: FABER, René, 37077 Göttingen (DE); LEUTHOLD, Martin, 37079 Göttingen (DE)
(86) Internationale Anmeldenummer: PCT/EP2011/000468
(87) Internationale Veröffentlichungsnummer: WO 2011/113508

(56) Entgegenhaltungen:
- WO-A2-01/96018
- DE-A1- 4 114 611
- US-A- 5 039 493
- US-A- 5 380 437
- US-A- 5 648 266
- US-A1- 2005 058 576
- US-A1- 2005 236 318
- US-B1- 6 451 261

## Beschreibung

Die vorliegende Erfindung betrifft eine Mehrfachlochplatte mit einem Oberteil und einem Unterteil mit jeweils einer Vielzahl miteinander kommunizierender Löcher und einem Filtermedium, welches durch Abdichtungsmittel zwischen dem Ober- und dem Unterteil fixierbar ist, und ihre Verwendung für Hochdurchsatz-Analysen zur Charakterisierung von Membranen für die adsorptive Stofftrennung.

Zur Charakterisierung von Membranen für die adsorptive Stofftrennung müssen eine Vielzahl von Parametern untersucht werden. Speziell für die Optimierung in der Aufarbeitung biotechnologischer Produkte ist es nicht praktikabel, in Einzelversuchen den Einfluss von Medieneigenschaften (Art und Zusammensetzung) oder die Wechselwirkung von Proteinen mit anderen Verbindungen zu betrachten. Zunehmend werden "High-Throughput-Screening"-Systeme (HTS-Systeme, Hochdurchsatz-Systeme) oder "Multi-well"-Systeme eingesetzt, die die Untersuchung einer großen Zahl von Einflußparametern in kurzer Zeit und unter reduziertem Verbrauch von teuren Medien ermöglichen. Eine große Verbreitung finden solche Systeme bereits in der Gelchromatographie. Eine Übertragung solcher HTS-Techniken auf Membranadsorber als Filtermedien ist von großem Interesse.

EP 1 566 209 A1 beschreibt eine Vorrichtung für die Affinitätschromatographie zur Proteinreinigung, die es ermöglicht, verschiedene Filtermedien (z. B. Membranen) zu Testzwecken einzusetzen. Nach Zentrifugation der zu analysierenden Probe und unter Anlegen eines Vakuums können Proteine aus großen Aufgabevolumen an dem Filtermedium gebunden werden und anschließend durch Elution in einem geringen Volumen aufkonzentriert werden. Die verwendeten Mikrofilter lassen sich auch mit einem Ultrafilter kombinieren. Die Vorrichtung ist mit verschieden großen Auffangvorrichtungen kombinierbar. In einer bevorzugten Ausführungsform wird die in die Vorrichtung eingelegte Membranronde von einer Seite durch einen O-Ring abgedichtet. Da jeweils nur ein Medium mit einer Vorrichtung filtriert werden kann, ist diese Vorrichtung für ein paralleles "Screening" mehrerer Proben ungeeignet.

US 4,427,415 beschreibt eine Mehrfachlochplatte als Vakuumfiltrationseinheit zur simultanen Analyse mehrerer Substanzen. Die individuellen Löcher ("Wells") eines Oberteils werden mit einzelnen Filterpapierscheiben bestückt und anschließend werden sukzessiv Lösungen mit verschiedenen Reagenzien in die Löcher eingefüllt und filtriert. Die Reagenzien werden dabei durch das Filterpapier zurückgehalten. Die Mehrfachlochplatte kann optional auch mit nur einer zusammenhängenden Filterpapierlage bestückt werden, die alle Löcher des Oberteils abdeckt. Durch aufeinanderfolgende Filtrationsprozesse können so unterschiedliche, durch den Filter zurückgehaltene Reagenzien miteinander reagieren und anschließend untersucht werden (Mikroskopie, Spektrometrie). Die Filtrationseinheit wird mittels Vakuum betrieben und ist durch eine Kunststoffdichtung auf einer Unterdruckeinheit plaziert, wobei die Dichtung peripher in einer Vertiefung der Unterdruckeinheit angeordnet ist. Bezüglich unerwünschter Kreuzkontaminationen zwischen benachbarten Löchern sind hierbei der nicht optimierte Fluidablauf aus den zylindrischen Wells, der nur unter Unterdruckanwendung möglich ist, und die Querdiffusion auf dem Filterpapier problematisch, weil die Mehrfachlochplatte keine Dichtungsmittel zwischen Oberteil und Unterteil aufweist, die für eine individuelle Abdichtung der einzelnen Löcher im Oberteil sorgt.

WO 01/87484 A2 beschreibt eine Einweg-Multiwell-Filterplatte, bei der an die untere Oberfläche der Filterplatte eine Membranfilterlage geklebt ist. Der Filterlage besteht aus einer oberen und einer unteren Oberfläche, wobei die obere Oberfläche die Filterdicke teilweise durchsetzende Einschnitte zum Eindringen eines Klebstoffs in die Filterlage hat, um eine Versiegelung zu bilden und die Filterlage mit der Unterseite der Platte zu verbinden. Die Anwendung eines Klebstoffs als Dichtmittel ist aufgrund der möglichen Kontamination des Filtrats durch herausgelöste Klebstoffkomponenten für viele biotechnologische Anwendungen nicht akzeptabel. Außerdem ist ein Austausch der Filterlage in der Filterplatte nicht möglich.

US 4,902,481 offenbart eine Multiwell-Filtrationseinheit mit einem Ober- und einem Unterteil, bei der die einzelnen Löcher ("Wells") voneinander fluiddicht isoliert sind und durch Anpressen des Oberteils an das Unterteil oder durch Klebe- oder Schnappverbindung zwischen Ober- und Unterteil abgedichtet sind. Jedes einzelne Loch wird mit einer individuellen Membranronde bestückt. Die Ausläufe der einzelnen Wells sind so eng gestaltet, daß kein Fluss allein aufgrund der Schwerkraft stattfindet und daß die sich am Auslauf bildenden, nicht ablaufenden Tropfen des Filtrats eine unerwünschte Quervermischung zwischen benachbarten Löchern erzeugen können.

Für die Aufreinigung von Proteinen sind Mehrfachlochstreifen der Firma Sartorius Stedim Biotech GmbH bekannt ("Vivawell Vac8 purification strips"), in denen acht einzelne Löcher mit einzelnen Membranen bestückt sind. Zwölf dieser Streifen lassen sich durch das Aufstecken in eine Halterung zu einer 96er-Mehrfachlochplatte kombinieren. In den Streifen sind die Membranen der einzelnen Löcher vollständig fluiddicht voneinander getrennt. Ein großer Nachteil dieser Vorrichtung ist jedoch die aufwendige Bestückung jedes einzelnen Loches mit einem individuellen Membranstanzling. Diese Stanzlinge müssen einzeln gestanzt, in die Wells eingesetzt und durch Hülseneinsätze, welche in die individuellen Wells eingesetzt werden, abgedichtet werden. Desweiteren ist eine gleichmäßige Durchströmung der Membranstanzlinge durch teilweise Auflage der Membranstanzlinge auf dem Lochboden der Permeatseite nicht gewährleistet. Ähnliche Nachteile ergeben sich auch für andere kommerziell verfügbare Platten ("Filter Bottom Microplates", Seahorse Bioscience) für "Screening"-Applikationen. Diese werden speziell zur Ultrafiltration angeboten. Dabei sind der Ablauf und die Abdichtung der Löcher nicht für Membranadsorber ausgelegt. Auch hier müssen die Löcher einzeln bestückt werden.

Aus US 5,047,215 ist eine Mehrfachlochplatte bekannt, deren Unterteil um jede Öffnung (jedes "Well") eine angeformte, ringförmige Wulst hat, welche in eine korrespondierende ringförmige Vertiefung an der Unterseite eines Oberteils der Mehrfachlochplatte eingreift, wobei ein mikroporöses Membranblatt zwischen Ober- und Unterteil eingelegt ist. Das Oberteil wird mit dem Unterteil zur Abdichtung der einzelnen "Wells" verschweißt, so daß nach erfolgtem Verschweißen des Oberteils mit dem Unterteil in den einzelnen Löchern der Platte jeweils separierte Membranstücke vorliegen. Abgesehen davon, daß die separierten Membranstücke nicht ohne erheblichen Aufwand aus der Mehrfachlochplatte nach der Filtration zur weiteren Analyse entnommen werden können, wirkt sich das vorgenannte Verschweißen nachteilig auf thermisch wenig belastbare Membranmaterialien, z. B. auf Basis von Polysacchariden, aus, so daß in den Randbereichen der Membranstücke, die benachbart zu der durch Verschweißen hergestellten Abdichtung liegen, die Filtrationseigenschaften der Membranstücke beeinträchtigt sein können.

EP 1 854 542 A1 offenbart eine Mehrfachlochplatte mit einer oberen Filterplatte mit einer Vielzahl von Röhren, die jeweils die oberen, zylindrischen Abschnitte der Kanäle der Löcher umfassen. Die Mehrfachlochplatte weist weiterhin ein Unterteil auf, welches die unteren Abschnitte der Löcher umfaßt, die aus einem kegelstumpfförmigen Übergangsbereich und einem an diesen angeschlossenen, zylindrischen unteren Röhrenteil bestehen, dessen Durchmesser kleiner als der Durchmesser der zylindrischen Kanalabschnitte im Oberteil ist. In jedes der Löcher werden individuelle Filterronden eingelegt, die auf dem oberen Rand der kegelstumpfförmigen Übergangsbereiche in dem Unterteil zu liegen kommen.

US 5,939,024 offenbart eine Mehrfachlochplatte, bei welcher eine Kreuzkontamination zwischen den einzelnen Löchern minimiert wird und welche aus einem Oberteil ("Collimator"), einem Unterteil ("Holding tray") und einem dazwischen eingelegten Filterblatt besteht. Damit zwischen den individuellen Löchern eine Kreuzkontamination durch radiale Querdiffusion von Analyten reduziert wird, weist der untere Teil eines jeden Lochkanals im Oberteil eine ringförmige Ausbuchtung ("lower rim") mit halbkreisförmigem Querschnitt auf, durch welche das Filterblatt auf die plane Oberfläche des Unterteils vollflächig angedrückt wird. Die Vorrichtung wird in der Autoradiographie und für "Liquid Scintillation Counting"-Verfahren eingesetzt, bei welchen ein Filterblatt, auf welchem Analyt immobilisiert ist, zwischen Ober- und Unterteil eingelegt wird, und die Membransegmente in den einzelnen Löchern nachfolgenden Behandlungsschritten mit weiteren Reagenzien unterzogen werden.

Diese Vorrichtung, die sich prinzipiell hervorragend für die vorgenannten Verfahren bewährt hat, weist den Nachteil auf, daß sie aufgrund der unzureichenden Abdichtung der individuellen Löcher und der planen Konstruktion der Auflagefläche für das Filterblatt im Unterteil ("Holding Tray") ungeeignet ist für Filtrationsprozesse, die auf adsorptiven Stofftrennungen beruhen und bei welchen (bio)chemische Bindungsreaktionen quantitativ bilanziert werden müssen.

Bei Verwendung eines Stapels aus mehreren blattförmigen Membranadsorberlagen in einer Mehrfachlochplatte gemäß US 5,939,024 für adsorptive Stofftrennprozesse wird eine unerwünschte Kreuzkontamination zwischen den einzelnen Löchern durch radiale Querdiffusion über das individuelle Loch hinaus, welches nur durch die ringförmigen Ausbuchtungen am Oberteil abgedichtet wird, beobachtet. Bei Verwendung eines Stapels aus mehreren Membranadsorberlagen als Filtermedium sind die in US 5,939,024 vorgeschlagenen Abdichtungsmittel nicht ausreichend, um eine Kreuzkontamination zwischen benachbarten Löchern auszuschließen. Diese unerwünschte Ausbreitung von Analyten über die peripheren Lochgrenzen hinaus verursacht Fehler in der Bilanzierung bezüglich der Adsorption des Analyten pro Membranfläche, z. B. bei Bindungsstudien.

US5039493 und US6451261 offenbaren Mehrfachlochplatten, die jeweils ein Oberteil, ein Unterteil und ein Filtermedium umfassen.

Der vorliegenden Erfindung liegt deshalb die Aufgabe zugrunde, eine Mehrfachlochplatte bereitzustellen, bei welcher während der Hochdurchsatz-Analytik ("High-Throughput-Screening") die Kreuzkontamination durch Querdiffusion des Analyten über die Lochbegrenzungen hinaus ausgeschlossen ist.

Weiterhin liegt der vorliegenden Erfindung die Aufgabe zugrunde, eine Verwendung der erfindungsgemäßen Mehrfachlochplatte für die Charakterisierung von Membranen für die adsorptive Stofftrennung vorzuschlagen.

Diese Aufgaben werden durch die in den Ansprüchen gekennzeichneten Ausführungsformen der vorliegenden Erfindung gelöst.

Die die Mehrfachlochplatte betreffende Aufgabe wird durch die Mehrfachlochplatte nach Anspruch 1 gelöst.

Aufgrund der jeweils paarweisen Fixierung des Filtermediums durch korrespondierende Abdichtungsmittel an Ober- und Unterteil wird eine Kreuzkontamination zwischen benachbarten Löchern, die die Stoffbilanzierung für das in einem Loch eingeschlossene Stück des Filtermediums verfälschen würde, zuverlässig ausgeschlossen.

Gemäß einer Ausführungsform der Erfindung umfaßt das Filtermedium ein Membranblatt. Bei einer weiteren Ausführungsform der Erfindung umfaßt das Filtermedium eine Vielzahl von übereinandergestapelten Membranblättern.

Die erfindungsgemäße Vorrichtung hat sich insbesondere beim Einsatz von Filtermedien umfassend eine Mehrzahl von übereinandergestapelten Membranblättern mit bis zu 10 Membranblättern, bevorzugt bis zu sechs Membranblättern und am meisten bevorzugt mit bis zu vier Membranblättern bewährt, um die Kreuzkontamination bzw. Querdiffusion zwischen benachbarten Löchern zu vermeiden.

Bei diesen beiden vorgenannten Ausführungsformen ist das Membranblatt - entweder als einzige Komponente des Filtermediums oder als Bestandteil eines Stapels von Membranblättern, welcher das Filtermedium bildet - bevorzugt eine mikroporöse Membran, an welche über optionale Abstandshalter Liganden gebunden sind. Die Liganden können funktionelle Gruppen sein, welche chemische oder physikalische Wechselwirkungen mit den zu untersuchenden Analyten eingehen. Unter chemischer oder physikalischer Wechselwirkung wird jede Art von ionogener, kovalenter, polarer oder hydrophober Wechselwirkung zwischen den Liganden und den Molekülen des Analyten verstanden.

Besonders bevorzugt besteht das Membranblatt aus Cellulosederivaten, besonders bevorzugt Cellulose oder Celluloseacetat.

Bei den vorgenannten Ausführungsformen ist das Filtermedium bevorzugt mit einem Fluid benetzt, d. h. das Filtermedium ist bevorzugt in feuchtem Zustand, z. B. nach vollständiger Benetzung durch ein Fluid (z. B. eine Puffer- oder Salzlösung), in der erfindungsgemäßen Vorrichtung fixiert, bevor eine Analyse mit der erfindungsgemäßen Vorrichtung durchgeführt wird.

Gemäß einer bevorzugten Ausführungsform sind die Abdichtungsmittel ringförmige Dichtwülste, welche an die dem Filtermedium zugewandten Seiten des Unterteils und des Oberteils angeformt sind.

Alternativ ist es möglich, daß um die Löcher herum auf den dem Filtermedium zugewandten Seiten des Oberteils und/oder des Unterteils Vertiefungen ausgebildet sind, in welche O-Ringe als Abdichungsmittel einlegbar bzw. fixierbar sind.

Alternativ können die Abdichtungsmittel ringförmige Dichtwülste sein, welche auf den dem Filtermedium zugewandten Seiten des Unterteils und des Oberteils herausgefräst sind. Diese Ausführungsform ermöglicht eine schnelle und kostengünstige Produktion des Ober- und des Unterteils aus "monolithischen" (einstückigen) Rohlingen, in welche die Vielzahl der Löcher eingebracht werden kann, wobei die Erhebungen der um die Löcher herum verlaufenden Dichtwülste aus dem Rohling herausgefräst werden können.

Überraschenderweise hat sich gezeigt, daß es besonders vorteilhaft ist, wenn das zwischen Ober- und Unterteil fixierte Filtermedium durch die jeweiligen Abdichtungsmittel des Ober- und Unterteils paarweise fixierbar ist. Auf diese Weise wird vermieden, daß das Filtermedium auf seiner Permeatseite vollflächig auf der dem Filtermedium zugewandten Seite des Unterteils aufliegt, wodurch eine unerwünschte radiale Querdiffusion von Analyten begünstigt würde.

Um eine Kreuzkontamination zwischen benachbarten Löchern zu vermeiden, aber dennoch einen hohen Fluß an zu filtrierendem Fluid durch die erfindungsgemäße Mehrfachlochplatte sicherzustellen, hat es sich bei der Erfindung bewährt, wenn die Vielzahl der Löcher im Oberteil zylindrische Kanäle mit einem Durchmesser d₁ sind und wenn die Vielzahl der mit diesen zylindrischen Kanälen kommunizierenden Löcher im Unterteil auf ihrer dem Filtermedium zugewandten Seite jeweils einen Übergangsbereich aufweisen, der sich von dem Durchmesser d₁ auf einen Durchmesser d₂ verengt, wobei sich auf der dem Filtermedium abgewandten Seite des Unterteils an den Übergangsbereich jeweils ein zylindrischer Kanal mit dem Durchmesser d₂ anschließt.

Optimale Ergebnisse bezüglich der Vermeidung einer Kreuzkontamination bei gleichzeitig sehr hohem Fluidfluß durch die Mehrfachplatte ergeben sich, wenn das Verhältnis zwischen den vorgenannten Durchmessern d₁ zu d₂ mindestens 4,0, bevorzugt mindestens 6,6 und besonders bevorzugt mindestens 8,0 beträgt.

Bevorzugt ist das Oberteil mit dem Untereil durch Verschraubung, Verklebung, Verrastung oder durch eine Klemm- oder Schnappverbindung verbindbar. Besonders bevorzugt ist eine Schraubverbindung.

Gemäß einer weiteren bevorzugten Ausführungsform der Erfindung ist das Ober- und/oder das Unterteil aus Aluminium oder Kunststoff gefertigt. Bei dieser Ausführungform sind besonders kostengünstig monolithische, gelochte Rohlinge für das Unter- und Oberteil herstellbar, bei welchen die Abdichtungsmittel, welche um die Löcher des Oberteils bzw. des Unterteils verlaufen, durch Herausfräsen erzeugbar sind.

Ein weiterer Gegenstand der vorliegenden Erfindung betrifft ein Verfahren zur Charakterisierung eines Filtermediums unter Verwendung der erfindungsgemäßen Mehrfachlochplatte, umfassend die Schritte:
A) Vorbenetzen des Filtermediums mit einem Fluid,
B) Einlegen des Filtermediums in einen Aufnahmebereich des Unterteils der Mehrfachlochplatte und Verbinden des Oberteils der Mehrfachlochplatte mit dem Unterteil unter paarweisem Fixieren des Filtermediums durch die Abdichtungsmittel der Mehrfachlochplatte,
C) Filtrieren mindestens eines Analyten durch das Filtermedium durch die miteinander kommunizierenden Löcher des Ober- und Unterteils der Mehrfachlochplatte, wobei der Analyt mit dem Filtermedium mindestens eine physikalische und/oder chemische Wechselwirkung eingeht,
D) Entfernen des Oberteils von dem Unterteil, und
E) Entnehmen des Filtermediums aus dem Aufnahmebereich und Analysieren der in Schritt C) erfolgten Wechselwirkung zwischen Filtermedium und Analyt.

Weiterhin wird eine Verwendung der erfindungsgemäßen Mehrfachlochplatte für die Hochdurchsatz-Analyse zur Charakterisierung von Membranen für die adsorptive Stofftrennung bereitgestellt. Erfindungsgemäße Verwendungen umfassen automatisierte Chromatographieprozesse zum Screening und zur Optimierung von Polishing- und Capturing-Prozessen bei der Aufreinigung von Proteinen und Mikroorganismen, die Untersuchung von Wechselwirkungen zwischen Aminosäureverbindungen und der Stabilität und des Verhaltens von Membranen gegenüber unterschiedlichen Substanzen sowie simultane chemische Reaktionen ein und desselben Filtermediums mit variablen Modifizierungsreagenzien oder die Enzymimmobilisierung für verschiedene bioanalytische Nachweismethoden.

Besonders bevorzugt ist eine Verwendung der erfindungsgemäßen Mehrfachlochplatte, bei welcher die Charakterisierung von Membranen durch Aufnahme einer Durchbruchskurve für ein Protein erfolgt.

Weitere Merkmale der Erfindung ergeben sich aus der nachfolgenden Beschreibung und den beigefügten Figuren, in denen bevorzugte Ausführungsformen der Erfindung beispielhaft veranschaulicht sind.

In den Figuren zeigen:
- Figur 1:: eine Explosionsansicht einer erfindungsgemäßen Mehrfachlochplatte bestehend aus Oberteil, Filtermedium und Unterteil,
- Figur 2:: einen Querschnitt durch die erfindungsgemäße Mehrfachlochplatte nach Figur 1 mit Oberteil, Filtermedium, Unterteil und paarweise das Filtermedium fixierenden Abdichtungsmitteln,
- Figur 3:: Anfärbungsergebnisse für das Filtermedium in einer erfindungsgemäßen Mehrfachlochplatte,
- Figur 4:: Anfärbungsergebnisse für das Filtermedium in einer Mehrfachlochplatte aus dem Stand der Technik,
- Figur 5:: Ergebnisse für den Phosphatnachweis nach Cooper in einer erfindungsgemäßen Mehrfachlochplatte,
- Figur 6:: eine Durchbruchskurve für bovines Serumalbumin, welche unter Verwendung der erfindungsgemäßen Mehrfachlochplatte ermittelt wird,
- Figur 7:: den Einfluß der (NH₄)₂SO₄-Konzentration in wäßriger Lösung auf die Bindungsfähigkeit eines Membranstapels der erfindungsgemäßen Mehrfachlochplatte für Ovalbumin, Lysozym und Immunoglobulin und
- Figur 8:: den Einfluß der auf die Membran geladenen Endotoxinmenge bei unterschiedlichen Beladungsvolumina auf die Endotoxin-Bindungsfähigkeit eines Membranstapels der erfindungsgemäßen Mehrfachlochplatte.

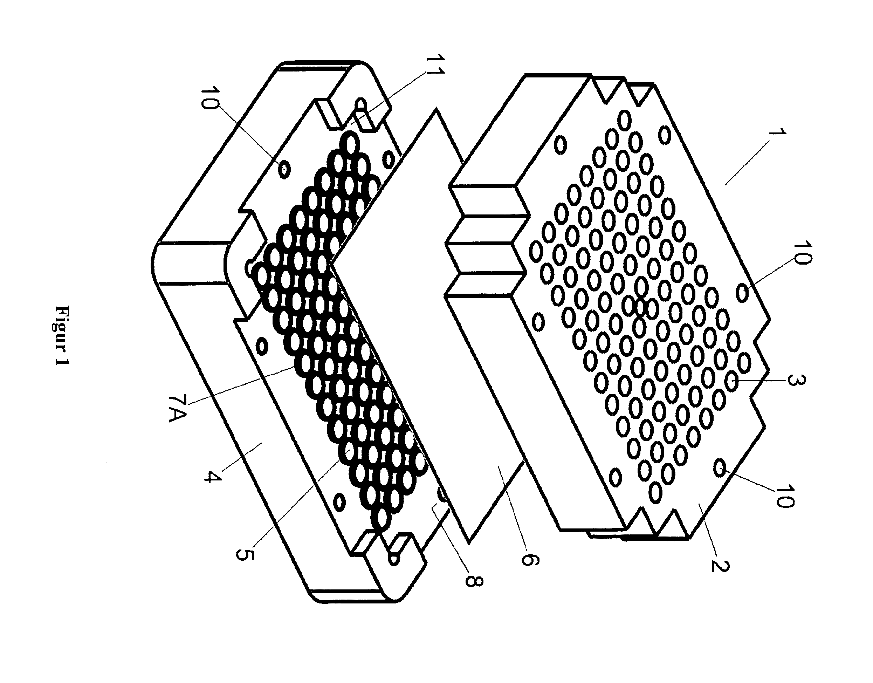

Figur 1 zeigt eine Mehrfachlochplatte **1** in Explosionsdarstellung, welche aus einem Oberteil **2** mit einer Vielzahl von Löchern **3** und aus einem Unterteil **4** mit einer Vielzahl von Löchern **5** und einem zwischen Oberteil **2** und Unterteil **4** befindlichen Filtermedium **6** besteht. Figur 1 zeigt weiterhin Abdichtungsmittel **7a,** die auf der dem Filtermedium **6** zugewandten Seite **8** des Unterteils **4** um die Löcher **5** herum verlaufen. Die korrespondierenden Abdichtungsmittel **7b** auf der Seite **9** des Oberteils **2,** die dem Filtermedium **6** zugewandt ist, sind nicht gezeigt. Die Abdichtungsmittel **7a** und **7b** können an das Unter- bzw. Oberteil **2, 4** angeformte oder aus dem Oberteil **2** und Unterteil **4** herausgefräste Dichtwülste oder in nicht gezeigte, um die Löcher **3** bzw. **5** verlaufende Vertiefungen (Rillen) eingelegte oder eingeklebte O-Ringe sein.

Bei einer bevorzugten Ausführungsform der Erfindung weisen Oberteil **2** und Unterteil **4** Schraubgewindebohrungen **10** für die Einführung von nicht gezeigten Schrauben auf, durch welche das Oberteil **2** mit dem Unterteil **4** verschraubbar ist. Das Filtermedium **6** liegt bevorzugt als Blatt vor und wird auf die Größe des Aufnahmebereichs **11** zugeschnitten. Bevorzugt wird das Filtermedium **6** in mit einem Fluid benetztem, d. h. feuchten, Zustand, z. B. nach vollständiger Benetzung durch eine Puffer- oder Salzlösung, in den Aufnahmebereich **11** eingelegt und nachfolgend erfolgt die Verbindung des Unterteils **4** mit dem Oberteil **2** zu der gebrauchsfertigen Mehrfachlochplatte **1**.

Nach Einlegen eines zugeschnittenen Filtermediums **6** wird das Oberteil **2** mit dem Unterteil **4** verschraubt und die Abdichtungsmittel **7a** und **7b** fixieren und dichten das Filtermedium **6** für jedes Loch einzeln ab. Hierbei wird durch die Abdichtungsmittel **7a** und **7b** eine der Vielzahl der Löcher in Oberteil **2** und Unterteil **4** entsprechende Anzahl an isolierten Reaktionsräumen ("Wells") mit jeweils einem Teil des Filtermediums **6** stoffdicht abgetrennt. Diese stoffdichte Abtrennung der einzelnen Reaktionsräume erlaubt eine gleichmäßige Benetzung der einzelnen von den Wells eingeschlossenen Filtermedienabschnitte.

Die erfindungsgemäße Mehrfachlochplatte **1** besteht besonders bevorzugt aus zwei eloxierten Aluminiumplatten mit jeweils 96 miteinander kommunizierenden Löchern im Oberteil **2** und im Unterteil **4** zur Befüllung der Wells.

Die Unterseite des Unterteils **4** kann mit einer nicht gezeigten Fluidauffangvorrichtung mit Vakuumerzeugungseinrichtung (z. B. einer Pumpe) verbunden sein, um Fluide durch die einzelnen Reaktionsräume zu befördern und ggf. die individuellen Permeatströme aus jedem Reaktionsraum ("Well") unterhalb des Unterteils **4** aufzusammeln und ggf. zu analysieren. Nach abgeschlossener Analyse kann das Oberteil **2** über ein Lösen der Schraubverbindung vom Unterteil **4** entfernt werden und das Filtermedium **6** entnommen und durch ein neues Filtermedium **6** ersetzt werden. Ein der Mehrfachlochplatte **1** entnommenes Filtermedium **6** kann einer weiteren Analytik unterzogen werden, wobei z. B. Proteine bzw. Substrate, die an individuelle Filtermediumareale, die vormals durch die Abdichtungsmittel **7a** und **7b** abgegrenzt wurden, gebunden sind, auf dem ausgebauten Filtermedium individuell und punktuell weiter untersucht werden können.

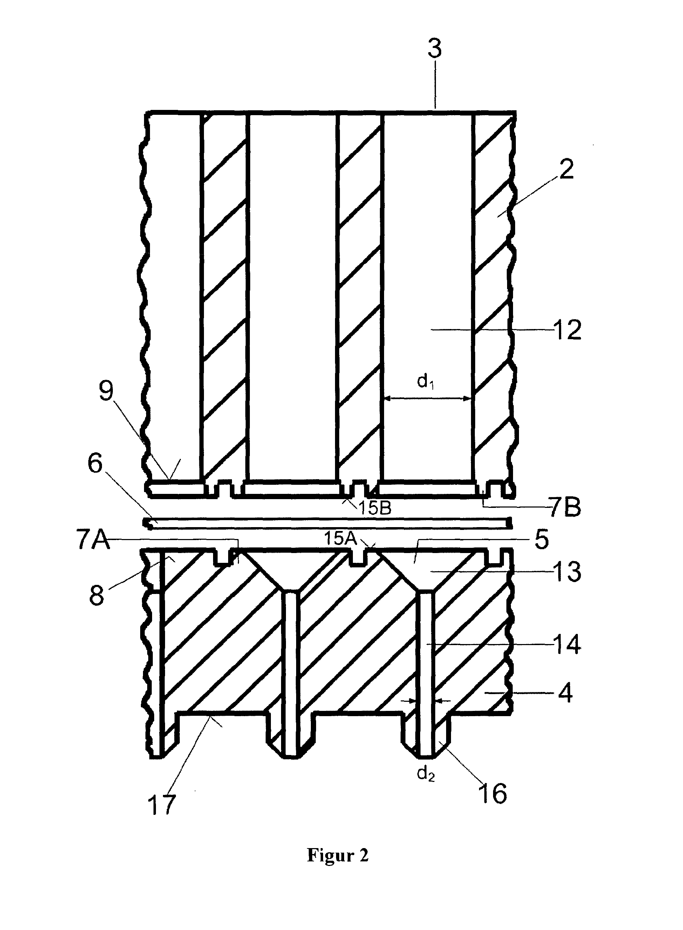

Figur 2 zeigt einen Querschnitt durch die erfindungsgemäße Mehrfachlochplatte 1 nach Figur 1 in Explosionsdarstellung. Bei dieser Ausführungsform der erfindungsgemäßen Mehrfachlochplatte stellen die Löcher **3** im Oberteil **2** zylindrische Kanäle **12** mit einem Durchmesser d₁ dar, während die Löcher **5** im Unterteil **4** auf der dem Filtermedium **6** zugewandten Seite **8** einen besonders bevorzugt kegelstumpfförmigen Übergangsbereich **13** aufweisen, der sich von dem Durchmesser d₁ auf den Durchmesser d₂ verengt, wobei sich auf der dem Filtermedium **6** abgewandten Seite **17** an den Übergangsbereich **13** ein zylindrischer Kanal **14** mit dem Durchmesser d₂ anschließt. Um die Löcher **3** des Oberteils **2** und um die Löcher **5** des Unterteils **4** verlaufen jeweils Abdichtungsmittel **7b** bzw. **7a**, die besonders bevorzugt als ringförmige Dichtwülste entweder an das Ober- und Unterteil, z. B. in Form von O-Ringen, angeformt sind oder aus diesem herausgefräst sind.

Die Abdichtungsmittel **7a** und **7b** sorgen jeweils paarweise für eine auf die Stirnflächen **15a** und **15b** der Abdichtungsmittel **7a** und **7b** beschränkte Abdichtungswirkung, so daß die wirksame Filtrationsfläche pro "Well" keinen Kontakt zu den Abdichtungsmitteln **7a** und **7b** hat. Hierdurch ist sichergestellt, daß das Filtermedium **6** auf seiner Permeatseite nicht vollflächig auf der dem Filtermedium **6** zugewandten Seite **8** des Unterteils **4** auffliegt, so daß Querdiffusion und Kreuzkontamination zwischen benachbarten Reaktionsräumen ("Wells") ausgeschlossen sind.

Der zylindrischen Kanäle **14** der Löcher im Unterteil **4** sind bevorzugt im Vergleich zu dem Durchmesser d₁ der zylindrischen Kanäle **12** im Oberteil **2** als signifikant dünnere Kapillaren mit dem Durchmesser d₂ ausgebildet, wobei der untere Teil dieser zylindrischen Kanäle **14** in eine Öffnung **16** mit spitz zulaufenden Seitenwänden mündet, welche den Tropfenablauf des Permeats in eine nicht dargestellte Fluidauffangrichtung mit Vakuumeinrichtung erleichtert.

Im gebrauchsfertig montieren Zustand der erfindungsgemäßen Mehrfachlochplatte 1 preßt der Druck der Verschraubung die Abdichtungsmittel **7a** und **7b** beidseitig und paarweise fest auf das Filtermedium **6**, so daß radial zur Strömungsrichtung durch Kapillarkräfte des Filtermediums **6** verursachte Kreuzkontaminationen (durch z. B. Proteine) verhindert werden.

### Beispiele

Die vorliegende Erfindung wird im Folgenden durch die Beispiele näher erläutert, ohne jedoch durch diese in irgendeiner Weise eingeschränkt zu sein.

### Beispiel 1: Nachweis der Unterbindung der Kreuzkontamination zwischen benachbarten Reaktionsräumen ("Wells") der erfindungsgemäßen Mehrfachlochplatte 1 bei paarweise an Ober- und Unterteil angeordneten Abdichtungsmitteln 7a und 7b

Zum Nachweis der Abdichtung der einzelnen in den Reaktionsräumen ("Wells") eingeschlossenen Abschnitte des Filtermediums **6** durch die Abdichtungsmittel **7a** und **7b** für bindende Substanzen werden Farbstofftests durchgeführt. Das Filtrationsmedium **6** besteht aus drei Lagen einer mikroporösen Cellulose-Membran (Fläche pro Lage: 86 cm², Dicke je Lage 250 µm) mit quaternären Ammoniumgruppen als anionenaustauschenden Gruppen (Sartobind^{®} Q-Membran der Fa. Sartorius Stedim Biotech GmbH) und wird nach Benetzung durch RO(Reverse-Osmose)-Wasser im Aufnahmebereich **11** des Unterteils **4** plaziert. Nach Verschrauben mit dem Oberteil **2** wird das Unterteil **4** auf einer Unterdruck erzeugenden Absaugeinrichtung positioniert. Die Reaktionsräume ("Wells") der assemblierten Mehrfachlochplatte **1** werden über das Oberteil **2** mit wäßrigen Lösungen (2 ml pro Well) der blauen und schwarzen bzw. roten Farbstoffe Methylenblau, Brillant-Schwarz und Ponceau S der Konzentration 0,05 g/l befüllt. Anschließend erzeugt eine Pumpe ein Vakuum von 350 mbar, die Farbstofflösungen durchströmen das Filtermedium **6** und werden in separaten, den einzelnen Wells zugeordneten Vertiefungen in den Auffangplatten der Absaugeinrichtung gesammelt. Wird die Bindekapazität der Membran für Farbstoff nicht überschritten, durchströmt lediglich das nicht bindende Methylenblau bzw. Brillant-Schwarz und Ponceau S die Membranen des Filtermediums **6** und kann im Permeatstrom gefunden werden.

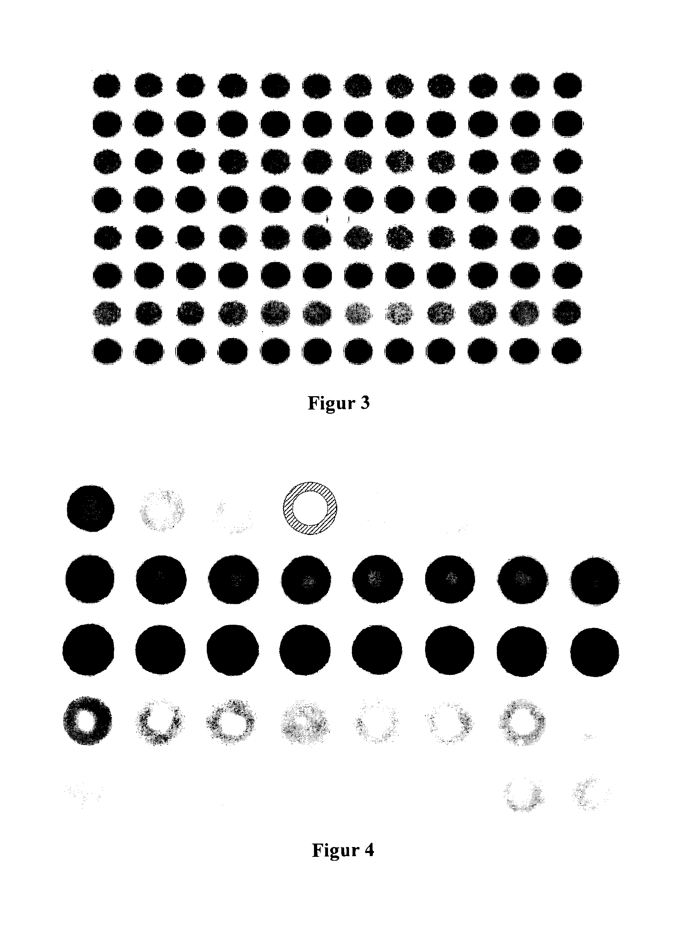

Figur 3 zeigt die Anfärbungsergebnisse für das vorgenannte Filtermedium **6**, bei welchem in die Wells der einzelnen waagerechten Lochreihen der Löcher **3** abwechselnd jeweils Methylenblau-, Brillant-Schwarz- oder Ponceau-S-Lösung gegeben wurde. Die Anfärbung erfolgt selektiv in Form homogen angefärbter Kreise nur in dem Membranbereich, der von den ringförmigen Abdichtungsmitteln **7a** und **7b** eingeschlossen wird. Es erfolgt keine unerwünschte radiale Ausbreitung der Farbstoffmoleküle über die Stirnflächen **15a** und **15b** der paarweise angeordneten Abdichtungsmittel **7a** und **7b** und über die mit Farbstofflösung benetzte Membranfläche hinaus.

### Vergleichsbeispiel 1: Auftreten von Kreuzkontaminationen zwischen benachbarten Reaktionsräumen ("Wells") bei der aus US 5,939,024 bekannten Mehrfachlochplatte, bei der das Oberteil ("Collimator") an seiner Unterseite um jedes Loch ringförmige Ausbuchtungen ("lower rims") aufweist

Das dreilagige, aus Ionenaustauschermembranen bestehende Filtermedium aus Beispiel 1 wird in eine Mehrfachlochplatte gemäß der Figuren 2 und 3 aus US 5,939,024 eingelegt, bei der nur das Oberteil an seiner dem Filtermedium zugewandten Seite um jedes Loch des Oberteils eine ringförmige Ausbuchtung aufweist und bei welcher das Filtermedium vollflächig auf einer planen Vertiefung im Unterteil der Mehrfachlochplatte aufliegt. Das Oberteil gemäß der Figuren 2 und 3 aus US 5,939,024 wird analog Beispiel 1 mit dem Unterteil gemäß der Figuren 2 und 3 aus US 5,939,024 verschraubt. Die assemblierte Mehrfachlochplatte wird mit der Absaugeinrichtung aus Beispiel 1 verbunden und nach Beispiel 1 einem definierten Vakuum ausgesetzt.

Figur 4 zeigt die Anfärbungsergebnisse für das vorgenannte Filtermedium, bei welchem pro Well der einzelnen waagerechten Lochreihen jeweils 2 ml einer Methylenblau-, Ponceau-S-Lösung oder Brillant-Schwarz-Lösung in die Wells gegeben wurden (Erste Reihe von oben: Ponceau S, 0,005 gew%-ige wäßrige Lösung im ersten Well von links, Methylenblau 0,001 gew%-ige wäßrige Lösung in allen übrigen Wells dieser Reihe, zweite Reihe von oben: Ponceau S, 0,05 gew%-ige wäßrige Lösung, dritte Reihe von oben: Brillantschwarz, 0,05 gew%-ige wäßrige Lösung, vierte Reihe von oben: Brillantschwarz, 0,005 gew%-ige wäßrige Lösung, fünfte Reihe von oben: Methylenblau, 0,001 gew%-ige wäßrige Lösung). Zur Verdeutlichung der radialen Querdiffusion des Farbstoffs ist im vierten Well von links in der ersten Reihe der Mehrfachlochplatte in Figur 4 die Kontur der Stirnfläche der ringförmigen Ausbuchtung ("lower rim") an der Unterseite des Oberteils eingezeichnet.

Die Vorrichtung nach diesem Vergleichsbeispiel zeigt bei diesen Anfärbungsergebnissen an mehrlagigen Membranadsorber-Stapeln, daß keine ausreichende Abdichtung erzielt werden kann und daß eine radiale Querdiffusion des Farbstoffs über die Stirnflächen der ringförmigen Ausbuchtungen am Oberteil und somit über die Begrenzungen des individuellen Wells hinaus auftritt. Außerdem zeigen die Anfärbeergebnisse aus der zweiten und vierten Reihe von oben, daß der Farbstoff nicht homogen über die wirksame Filterfläche im Reaktionsraum ("Well") wie in Beispiel 1 verteilt ist, sondern zu den Rändern des Wells hin stärker angereichert wird als in der Mitte des Wells. Mit den ringförmigen Ausbuchtungen am Oberteil allein ist bei Filtermedien aus mehreren Lagen eines Membranadsorbers keine ausreichende Abdichtung erzielbar.

### Beispiel 2: Nachweis des Ausschlusses von Kreuzkontamination zwischen benachbarten Reaktionsräumen ("Wells") mittels des Phosphattests nach Cooper

Eine erfindungsgemäße Mehrfachlochplatte **1** nach den Figuren 1 und 2 wird vorzugsweise für Applikationen im Bereich des "High-Throughput-Screening" eingesetzt, bei welchen in den einzelnen "Wells" unterschiedliche Beladungsbedingungen bezüglich der Pufferzusammensetzung auftreten. Voraussetzung hierfür ist, daß nachweislich auch die in diesen Pufferlösungen enthaltenen Salze nicht durch radiale Querdiffusion von einem Well in ein benachbartes Well gelangen können. Für den Nachweis, daß auch anorganische Salzlösungen in den Wells keine Kreuzkontaminationen verursachen, wird die Mehrfachlochplatte **1** mit drei Lagen einer mit RO-Wasser vorbenetzten Ionenaustauschermembran aus Beispiel 1 bestückt und anschließend "spaltenweise" mit 0,5 ml Phosphatlösung NaH₂PO₄ der Konzentration 0,16 g/l pro Well benetzt. Alle anderen Wells werden mit destillierten Wasser befüllt. Nach 15 Minuten werden die Flüssigkeiten durch einen Druckgradienten in eine Auffangvorrichtung geleitet. Der Phosphatgehalt der Flüssigkeiten in den individuellen Auffangbehältern der Auffangvorrichtung wird nach Cooper (Cooper, "The Tools of Biochemistry", Wiley-Interscience, 1977) bestimmt. Bei diesem Nachweis nach Cooper handelt es sich um einen hochempfindlichen Nachweis, der es ermöglicht, Phosphationen noch in einer Grenzkonzentration von 2 µg/ml durch intensive Blauschwarzfärbung nachzuweisen.

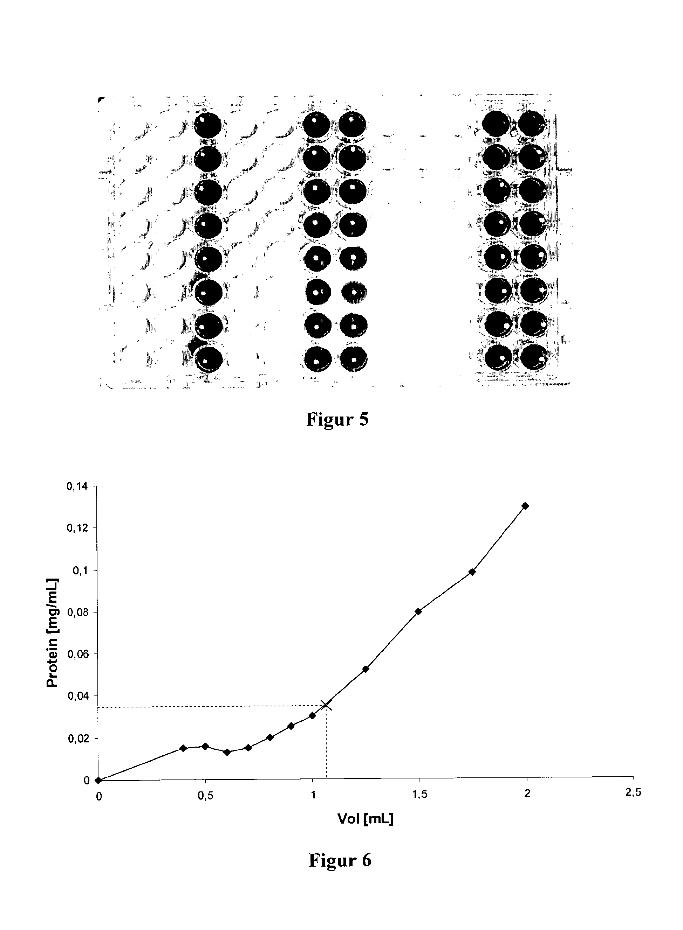

Figur 5 zeigt die Ergebnisse für den Phosphatnachweis nach Cooper für die Beladung der jeweils 3., 6., 7., 11. und 12. Spalte einer erfindungsgemäßen Mehrfachlochplatte **1** mit Phosphatlösung (Beladung 0,5 ml pro Reaktionsraum/"Well" mit 0,16 g/l NaH₂PO₄). Die Blauschwarzfärbung tritt nur in den mit Phosphatlösung beladenen Wells auf, nicht jedoch in angrenzenden Wells, die lediglich mit destilliertem Wasser gespült wurden.

### Beispiel 3: Aufnahme von Durchbruchskurven im Hochdurchsatzverfahren mit der erfindungsgemäßen Mehrfachlochplatte

Durchbruchskurven von Membranen werden im Allgemeinen durch die kontinuierliche Beladung von Filtrationseinheiten aufgezeichnet. Sie zeigen, ob und in welchem Ausmaß eine Membran in der Lage ist, einen oder mehrere Stoffe zu binden oder zurückzuhalten. Je nach Fläche der eingesetzten Membran ist die aufzubringende Menge an den meist teuren Substanzen oft groß. Simultane Mehrfachtests sind so aus ökonomischen Gründen nicht durchführbar.

Die erfindungsgemäße Mehrfachlochplatte ermöglicht die Aufnahme einer Durchbruchskurve unter geringem Verbrauch an Analyten. Es wird eine Proteinlösung mit gleichbleibender Konzentration, jedoch mit unterschiedlichen Volumina in einzelne Wells gefällt. Bei bekannter Beladungskonzentration kann durch eine Analyse des Permeats das Durchbruchverhalten aufgenommen und bewertet werden. Für technische Zwecke ist es oftmals ausreichend, zu erkennen, wann ein Durchbruch von maximal 10 % des Proteins im Eluat erreicht wird.

Die Korrelation von mit der erfindungsgemäßen Mehrfachlochplatte erhaltenen Durchbruchskurven mit Durchbruchskurven, die konventionell mittels der vorgenannten kontinuierlichen Beladung ein und derselben Filtrationseinrichtung mit steigenden Beladungskonzentrationen erhalten wurden, ist hervorragend.

Die Durchbruchskapazität eines Filtermediums aus drei Lagen einer mit RO-Wasser vorbenetzten Ionenaustauschermembran aus Beispiel 1 in einer erfindungsgemäßen Mehrfachlochplatte **1** mit 12 Wells wird für bovines Serumalbumin bestimmt. Die 12 Wells wurden mit 12 unterschiedlichen Volumen Ausgangslösung (Tris/HCl, pH = 7,4) mit einer Konzentration von 0,35 g/l bovinem Serumalbumin beladen (jeweils 6 Parallelproben). Anschließend wurde die Konzentration an bovinem Serumalbumin im Permeat bestimmt. Die Auswertung zeigt, dass bei 1,1 ml an in ein Well gegebener Lösung mehr als 10 % der Ausgangsmenge an Protein in das Permeat durchbrechen. Bei einem Filtermedium mit drei Lagen Membran pro Well bei einer Fläche von 0,7 cm² beträgt die dynamische Bindekapazität bei 10 % Durchbruch 0,54 mg/cm².

Figur 6 zeigt eine Durchbruchskurve für bovines Serumalbumin, welche mit einer erfindungsgemäßen Mehrfachlochplatte mit 12 Wells aufgenommen wurde.

### Beispiel 4: Untersuchung des Einflusses der Salzkonzentration auf das Proteinbindevermögen von Membranadsorbern im Hochdurchsatzverfahren mit einer erfindungsgemäßen Mehrfachlochplatte 1 mit 96 Wells

Für großtechnische Prozesse ist es nötig, Prozeßbedingungen schon im kleinen Maßstab für Membranadsorber zu optimieren. Da Proteinwechselwirkungen und Pufferzusammensetzung sehr komplex sind, sind oft viele Versuche nötig, um verbesserte Bedingungen oder auch geeignete Membranen für die Prozesse zu finden. In Hochdurchsatzverfahren kann eine Vielzahl von Prozessparametern simultan überprüft werden. Für ein mit RO-Wasser vorbenetztes Filtrationsmedium, welches aus drei Lagen (Fläche pro Lage: 86 cm², Dicke pro Lage: 250 µm) einer Phenylaminliganden enthaltenden, vernetzten Cellulosemembran (Sartobind^{®} Phenyl) besteht, ist es mittels einer erfindungsgemäßen Mehrfachlochplatte **1** mit 96 Reaktionsräumen ("Wells") möglich, 96 verschiedene Bedingungen zu überprüfen. In diesem Beispiel werden 24 verschiedene Bedingungen zu jeweils vier Parallelproben getestet. Damit kann der Einfluss von Salzen, wie Diammoniumsulfat ((NH₄)₂SO₄), auf die Bindung von Modellproteinen (hier: Ovalbumin, Lysozym und Immunoglobulin) auf ein Filtermedium mit mehreren Lagen Membranadsorbern ermittelt werden. Hierzu wird die Konzentration an Protein im Durchlauf der einzelnen Wells bestimmt. Je mehr Protein im Permeat nachweisbar ist, umso schlechter ist die Bindung des Proteins an die Membran.

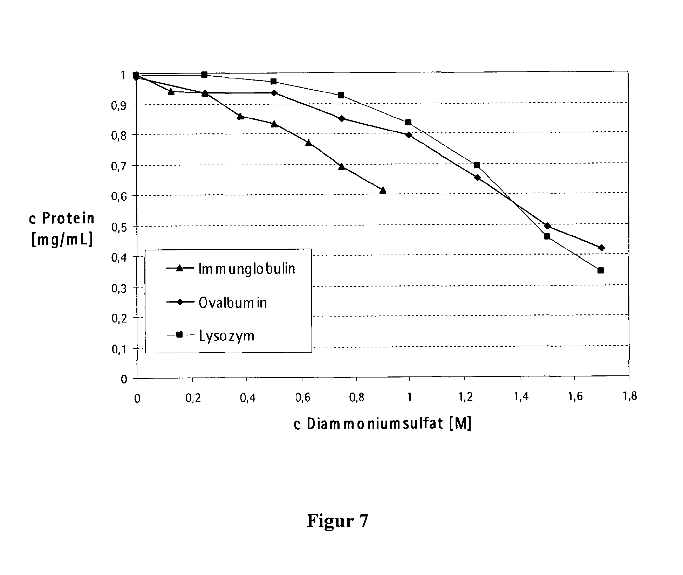

Figur 7 zeigt den Einfluß der (NH₄)₂SO₄-Konzentration in wäßriger Lösung (0,1 M Natriumphosphatpuffer (NaPi), pH = 7; 8 Konzentrationen an (NH₄)₂SO₄ bis maximal 1,7 M, Beladung des jeweiligen Proteins pro Well 0,8 mg/cm², Konzentration je 1 mg/ml) auf die Bindungsfähigkeit des dreilagigen Membranstapels für Ovalbumin, Lysozym und Immunoglobulin. Die maximale Konzentration an Diammoniumsulfat im Puffer wird durch die beginnende Ausfällung des jeweiligen Proteins begrenzt.

### Beispiel 5: Untersuchungen bezüglich des Einflusses der Endotoxinkonzentration und des Endotoxinbeladungsvolumens auf das Endotoxinbindevermögen von Membranadsorbern im Hochdurchsatzverfahren mit einer erfindungsgemäßen Mehrfachlochplatte 1 mit 96 Wells

Endotoxine sind Zerfallsprodukte von Bakterien und sind schon in niedrigsten Konzentrationen biologisch wirksam. Sie kommen in unterschiedlichen Konzentrationen ubiquitär in der Umwelt vor. Gelangen Endotoxine in den Blutkreislauf von Lebewesen, können diese unerwünschte Immunreaktionen hervorrufen. Bei Endotoxinen handelt es sich um Lipopolysaccharide, welche erst bei 200 °C inaktiviert werden können.

In biotechnischen Produktionen kann es, je nach Verwendung der Endprodukte, nötig sein, diese Endotoxine in verschiedenen Prozeßschritten zu entfernen. Auch adsorptive Membranen können dabei zur Endotoxinabreicherung im Up- oder Downstreambereich eingesetzt werden.

Durch Einsatz der erfindungsgemäßen Mehrfachlochplatte **1** mit 96 Wells kann die Endotoxinentfernung für adsorptive Filtermaterialien untersucht werden. Von Vorteil ist, daß sich die Mehrfachlochplatte bei Fertigung des Oberteils **2** und des Unterteils **4** aus Aluminium bei höheren Temperaturen (> 200 °C) zuverlässig entpyrogenisieren lässt und somit für die Untersuchung verschiedener Filtermaterialien mehrfach verwendbar ist.

In diesem Beispiel werden Endotoxinlösungen (Endotoxin "BIO Whittaker E. coli 05" B55 Lot 3L2770; Puffer: 20 mM Tris (pH = 7,5), 150 mM NaCl) verschiedener Konzentrationen (10 - 1.000.000 EU ("Endotoxin units")/ml) zu unterschiedlichen Volumen (0,25, 0,5 und 1 ml) durch die Mehrfachlochplatte **1** filtriert (Filtermedium **6**, mit RO-Wasser vorbenetzt: Drei Lagen einer mikroporösen Cellulosemembran mit Polyallylamin-Ligand, hergestellt nach Beispiel 21 von WO 2009/127285 A1 mit einer Fläche pro Lage von 86 cm² und einer Dicke pro Lage von 290 µm, Membranfläche pro Well 1 cm²). Die Konzentration an Endotoxin im Durchlauf der einzelnen Wells wird bestimmt.

Der Endotoxinnachweis wird nach der "Gel Clot"-Methode mit dem "LAL"-Test (Limulus-Amöbozyten-Lysat) durchgeführt. Das aus dem Pfeilschwanzkrebs gewonnene Lysat (Limulus-Amöbozyten-Lysat, Quelle: Charles River Endosafe, USA, Endosafe KTA, U.S License No. 1197) reagiert spezifisch auf Endotoxine. Das flüssige farblose Lysat koaguliert mit Endotoxin zu einem festen milchigen Gel ("Gel clot"). Die Nachweisgrenze des eingesetzten Lysats liegt bei 0,06 EU/ml Endotoxin. Diese Nachweisgrenze entspricht einer Endotoxinkonzentration von 6 pg/ml. Je mehr Endotoxin im Permeat nachweisbar ist, umso schlechter ist die Bindung des Endotoxins an die Membran.

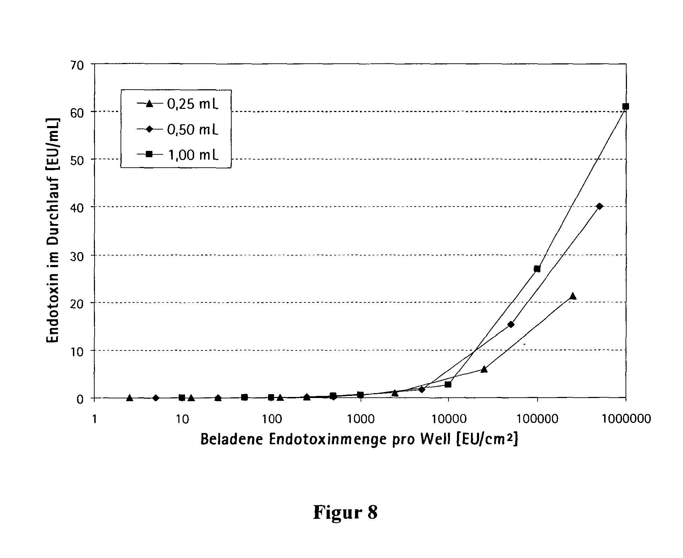

Figur 8 zeigt den Einfluß der auf die Membran geladenen Endotoxinmenge bei unterschiedlichen Beladungsvolumina (0,25 ml, 0,50 ml und 1,00 ml) auf die Bindungsfähigkeit des dreilagigen Membranstapels für Endotoxine.

## Patentansprüche

1. Mehrfachlochplatte (**1**) umfassend
- ein Oberteil (**2**) mit einer Vielzahl von Löchern (**3**),
- ein Unterteil (**4**) mit einer Vielzahl von Löchern (**5**),
die in kommunizierender Verbindung mit den Löchern (**3**) des Oberteils (**2**) stehen, und
- mindestens ein Filtermedium (**6**), welches zwischen dem Ober- und dem Unterteil (**2**, **4**) fixierbar ist,
wobei das Oberteil (**2**) und das Unterteil (**4**) auf ihren dem Filtermedium (**6**) zugewandten Seiten (**8**, **9**) um die Löcher (**3, 5**) herum verlaufende Abdichtungsmittel (**7a**, **7b**) aufweisen, und
wobei das Filtermedium (**6**) entlang seiner Ober- und Unterseite jeweils paarweise durch die Abdichtungsmittel (**7b**) des Oberteils (**2**) und durch die Abdichtungsmittel (**7a**) des Unterteils (**4**) fixierbar ist,
die Vielzahl der Löcher (**3**) im Oberteil (**2**) zylindrische Kanäle (**12**) mit einem Durchmesser d₁ sind und wobei die Vielzahl der mit diesen zylindrischen Kanälen (**12**) kommunizierenden Löcher (**5**) im Unterteil (**4**) auf ihrer dem Filtermedium zugewandten Seite (**8**) jeweils einen Übergangsbereich (**13**) aufweisen, der sich von dem Durchmesser d₁ auf einen Durchmesser d₂ verengt, wobei sich auf der dem Filtermedium (**6**) abgewandten Seite (**17**) des Unterteils (**4**) an den Übergangsbereich (**13**) jeweils ein zylindrischer Kanal (**14**) mit dem Durchmesser d₂ anschließt,
**dadurch gekennzeichnet, dass**
das Verhältnis zwischen d₁ zu d₂ mindestens 4,0 beträgt.

2. Mehrfachlochplatte (**1**) nach Anspruch 1,
**dadurch gekennzeichnet, daß**
das Filtermedium (**6**) mindestens ein Membranblatt umfaßt.

3. Mehrfachlochplatte (**1**) nach Anspruch 2,
**dadurch gekennzeichnet, daß**
das Filtermedium (**6**) eine Mehrzahl von übereinandergestapelten Membranblättern umfaßt.

4. Mehrfachlochplatte (**1**) nach Anspruch 2 oder 3,
**dadurch gekennzeichnet, daß**
das Membranblatt eine mikroporöse Membran ist, an welche Liganden gebunden sind.

5. Mehrfachlochplatte (**1**) nach einem der vorhergehenden Ansprüche,
**dadurch gekennzeichnet, daß**
das Filtermedium (**6**) mit einem Fluid benetzt ist.

6. Mehrfachlochplatte (**1**) nach einem der vorhergehenden Ansprüche,
**dadurch gekennzeichnet, daß**
die Abdichtungsmittel (**7a**, **7b**) ringförmige Dichtwülste sind, welche an die dem Filtermedium (**6**) zugewandten Seiten (**8**, **9**) des Unterteils (**4**) und des Oberteils (**2**) angeformt sind.

7. Mehrfachlochplatte (**1**) nach einem der vorhergehenden Ansprüche 1 bis 5,
**dadurch gekennzeichnet, daß**
die Abdichtungsmittel (**7a**, **7b**) ringförmige Dichtwülste sind, welche auf den dem Filtermedium (**6**) zugewandten Seiten (**8**, **9**) des Unterteils (**4**) und des Oberteils (**2**) herausgefräst sind.

8. Mehrfachlochplatte (**1**) nach einem der vorhergehenden Ansprüche,
**dadurch gekennzeichnet, daß**
das Oberteil (**2**) mit dem Unterteil (**4**) durch Verschraubung, Verklebung, Verrastung, eine Klemm- oder Schnappverbindung verbindbar ist.

9. Mehrfachlochplatte (**1**) nach einem der vorhergehenden Ansprüche,
**dadurch gekennzeichnet, daß**
das Oberteil- und/oder das Unterteil (**2**, **4**) aus Aluminium oder Kunststoff gefertigt ist.

10. Verwendung einer Mehrfachlochplatte (**1**) nach einem der vorhergehenden Ansprüche 1 bis 9 für die Hochdurchsatz-Analyse, wobei die Hochdurchsatz-Analyse eine Charakterisierung von Filtermedien für die adsorptive Stofftrennung ist,
**dadurch gekennzeichnet, daß**
als Filtermedium mindestens eine Membran verwendet wird und daß die Charakterisierung der Membran durch eine Aufnahme einer Durchbruchskurve für ein Protein erfolgt.

11. Verfahren zur Charakterisierung eines Filtermediums unter Verwendung einer Mehrfachlochplatte (**1**) nach einem der vorhergehenden Ansprüche 1 bis 9, umfassend die Schritte:
A) Vorbenetzen des Filtermediums (**6**) mit einem Fluid,
B) Einlegen des Filtermediums (**6**) in einen Aufnahmebereich (**11**) des Unterteils (**4**) und Verbinden des Oberteils (**2**) mit dem Unterteil (**4**) unter paarweisem Fixieren des Filtermediums (**6**) durch die Abdichtungsmittel (**7a**, **7b**),
C) Filtrieren mindestens eines Analyten durch das Filtermedium (**6**) durch die miteinander kommunizierenden Löcher (**3**) und (**5**), wobei der Analyt mit dem Filtermedium (**6**) mindestens eine physikalische und/oder chemische Wechselwirkung eingeht,
D) Entfernen des Oberteils (**2**) von dem Unterteil (**4**), und
E) Entnehmen des Filtermediums (**6**) aus dem Aufnahmebereich (**11**) und Analysieren der in Schritt C) erfolgten Wechselwirkung zwischen Filtermedium (**6**) und Analyt.

## Claims

1. Multi-well apertured plate (1) comprising
- an upper part (2) with a plurality of holes (3),
- a lower part (4) with a plurality of holes (5), which are in communicating connection with the holes (3) of the upper part (2), and
- at least one filter medium (6) fixable between the upper part (2) and the lower part (4),
wherein the upper part (2) and the lower part (4) have on the sides (8, 9) thereof facing the filter medium (6) sealing means (7a, 7b) extending around the holes (3, 5) and
wherein the filter medium (6) is fixable along its upper side and lower side in each instance in paired manner by the sealing means (7b) of the upper part (2) and the sealing means (7a) of the lower part (4),
the plurality of holes (3) in the upper part (2) are cylindrical channels (12) with a diameter d₁ and wherein the plurality of holes (5), which communicate with these cylindrical channels (12), in the lower part (4) have on the side thereof (8) facing the filter medium a respective transition region (13) narrowing from the diameter d₁ to a diameter d₂, wherein on the side (17) of the lower part (4) remote from the filter medium (6) a respective cylindrical channel (14) with the diameter d₂ is connected with the transition region (13), **characterised in that** the ratio between d₁ and d₂ is at least 4.0.

2. Multi-well plate (1) according to claim 1, **characterised in that** the filter medium (6) comprises at least one membrane sheet.

3. Multi-well plate (1) according to claim 2, **characterised in that** the filter medium (6) comprises a plurality of membrane sheets stacked one above the other.

4. Multi-well plate (1) according to claim 2 or 3, **characterised in that** the membrane sheet is a microporous membrane to which ligands are bound.

5. Multi-well plate (1) according to any one of the preceding claims, **characterised in that** the filter medium (6) is wetted by a fluid.

6. Multi-well plate (1) according to any one of the preceding claims, **characterised in that** the sealing means (7a, 7b) are annular bead seals which are integrally formed at these sides (8, 9) of the lower part (4) and the upper part (2) facing the filter medium (6).

7. Multi-well plate (1) according to any one of the preceding claims 1 to 5, **characterised in that** the sealing means (7a, 7b) are annular bead seals which are milled-out on these sides (8, 9) of the lower part (4) and the upper part (2) facing the filter medium (6).

8. Multi-well plate (1) according to any one of the preceding claims, **characterised in that** the upper part (2) is connectible with the lower part (4) by screw-connection, gluing, detenting, a clamp connection or a snap connection.

9. Multi-well plate (1) according to any one of the preceding claims, **characterised in that** the upper part (2) and/or lower part (4) is or are made of aluminium or plastics material.

10. Use of a multi-well plate (1) according to any one of the preceding claims 1 to 9 for high-throughput analysis, wherein the high-throughput analysis is a characterisation of filter media for adsorptive substance separation, **characterised in that** at least one membrane is used as filter medium and that the characterisation of the medium is effected by recording a breakthrough plot for a protein.

11. Method of characterising a filter medium with use of a multi-well plate (1) according to any one of the preceding claims 1 to 9, comprising the steps:
A) pre-wetting the filter medium (6) with a fluid,
B) placing the filter medium (6) in a receiving region (11) of the lower part (4) and connecting the upper part (2) with the lower part (4) under paired fixing of the filter medium (6) by the sealing means (7a, 7b),
C) filtering at least one analyte through the filter medium (6) via the intercommunicating holes (3 and 5), wherein the analyte enters into at least a physical and/or chemical interaction with the filter medium (6),
D) removing the upper part (2) from the lower part (4) and
E) removing the filter medium (6) from the receiving region (11) and analysing the interaction between filter medium (6) and analyte which took place in step C).

## Revendications

1. Plaque à plusieurs trous (1) comprenant
- une partie supérieure (2) avec une pluralité de trous (3),
- une partie inférieure (4) avec une pluralité de trous (5),
qui sont en liaison communicante avec les trous (3) de la partie supérieure (2),
et
- au moins un milieu filtrant (6), lequel peut être fixé entre les parties supérieure et inférieure (2, 4),
la partie supérieure (2) et la partie inférieure (4) présentant de moyens assurant l'étanchéité (7a, 7b) disposés autour des trous (3, 5) sur leurs faces (8, 9) orientées vers le milieu filtrant (6), et
le milieu filtrant (6) pouvant être fixé le long des ses faces supérieure et inférieure, chaque fois, par appariement, à l'aide des moyens assurant l'étanchéité (7b) de la partie supérieure (2) et des moyens assurant l'étanchéité (7a) de la partie inférieure (4),
la pluralité de trous (3) dans la partie supérieure (2) est constituée de canaux cylindriques (12) ayant un diamètre d₁ et la pluralité des trous (5) communiquant avec ces canaux cylindriques (12) dans la partie inférieure (4) présente chaque fois un domaine de transition (13) sur sa face (8) orientée vers le milieu filtrant, qui s'amenuise à partir du diamètre d₁ vers un diamètre d₂, un canal cylindrique (14) avec un diamètre d₂ faisant chaque fois suite au domaine de transition (13) sur la face (17) de la partie inférieure (4) opposée au milieu filtrant (6),
**caractérisée en ce que**
le rapport entre d₁ et d₂ est d'au moins 4,0.

2. Plaque à plusieurs trous (1) selon la revendication 1,
**caractérisée en ce que**
le milieu filtrant (6) comporte au moins une membrane en feuille.

3. Plaque à plusieurs trous (1) selon la revendication 2,
**caractérisée en ce que**
le milieu filtrant (6) comporte une pluralité de membranes en feuilles empilées les unes sur les autres.

4. Plaque à plusieurs trous (1) selon les revendications 2 ou 3,
**caractérisée en ce que**
la membrane en feuille est une membrane microporeuse sur laquelle sont liés des ligands.

5. Plaque à plusieurs trous (1) selon l'une des revendications précédentes,
**caractérisée en ce que**
le milieu filtrant (6) est humidifié avec un fluide.

6. Plaque à plusieurs trous (1) selon l'une des revendications précédentes,
**caractérisée en ce que**
les moyens assurant l'étanchéité (7a, 7b) sont des boudins d'étanchéité en forme d'anneaux, lesquels sont formés sur les faces (8, 9) de la partie inférieure (4) et de la partie supérieure (2) orientées vers le milieu filtrant (6).

7. Plaque à plusieurs trous (1) selon l'une des revendications précédentes 1 à 5,
**caractérisée en ce que**
les moyens assurant l'étanchéité (7a, 7b) sont des boudins d'étanchéité en forme d'anneaux, lesquels sont façonnés par fraisage sur les faces (8, 9) de la partie inférieure (4) et de la partie supérieure (2) orientées vers le milieu filtrant (6).

8. Plaque à plusieurs trous (1) selon l'une des revendications précédentes,
**caractérisée en ce que**
la partie supérieure (2) peut être reliée avec la partie inférieure (4) par un vissage, un collage, un verrouillage, une liaison par pincement ou par encliquetage.

9. Plaque à plusieurs trous (1) selon l'une des revendications précédentes,
**caractérisée en ce que**
les parties supérieure et/ou inférieure (2, 4) sont fabriquées en aluminium ou en matière synthétique.

10. Utilisation d'une plaque à plusieurs trous (1) selon l'une des revendications précédentes 1 à 9 pour une analyse séquentielle à pression élevée, l'analyse séquentielle à pression élevée étant une caractérisation des milieux filtrants pour la séparation des substances par adsorption,
**caractérisée en ce**
**qu'**au moins une membrane est utilisée en tant que milieu filtrant et que la caractérisation de la membrane s'effectue par l'enregistrement d'une courbe d'adsorption/de désorption d'une protéine.

11. Procédé de caractérisation d'un milieu filtrant moyennant l'utilisation d'une plaque à plusieurs trous (1) selon l'une des revendications précédentes 1 à 9, comprenant les étapes :
A) d'humidification préalable du milieu filtrant (6) avec un fluide,
B) de mise en place du milieu filtrant (6) dans une zone de réception (11) de la partie inférieure (4) et mise en communication de la partie supérieure (2) avec la partie inférieure (4) moyennant une fixation par appariement du milieu filtrant (6) par les moyens assurant l'étanchéité (7a, 7b),
C) de filtration d'au moins un analyte par le milieu filtrant (6) par les trous (3) et (5) communiquant entre eux, l'analyte entrant dans au moins un processus d'échange physique et/ou chimique avec le milieu filtrant (6),
D) de détachement de la partie supérieure (2) de la partie inférieure. (4), et
E) de prélèvement du milieu filtrant (6) à partir de la zone d'admission (11) et d'analyse du processus d'échange ayant eu lieu entre le milieu filtrant (6) et l'analyte pendant l'étape C).
